# FASCICULE DE BREVET EUROPEEN

(11) **EP 4 326 575 B1**
(45) Date de publication et mention de la délivrance du brevet: **29.04.2026**
(21) Numéro de dépôt: 22711277.8
(22) Date de dépôt: 02.03.2022
(51) Int. Cl.: B60K 15/063, B62D 21/15, B62D 29/00, B60K 6/20

(54) **DISPOSITIF DE PROTECTION DE RÉSERVOIR À CARBURANT POUR VÉHICULE AUTOMOBILE**
VORRICHTUNG ZUM SCHUTZ EINES KRAFTSTOFFTANKS FÜR EIN KRAFTFAHRZEUG
DEVICE FOR PROTECTING A FUEL TANK FOR A MOTOR VEHICLE

(30) Priorité: 20.04.2021 FR 2104111
(43) Date de publication de la demande: 28.02.2024
(73) Titulaire: Stellantis Auto SAS, 78300 Poissy (FR)
(72) Inventeur: PERU, Marc, 92290 CHATENAY MALABRY (FR); ZEITOUNI, Richard, 78390 BOIS D ARCY (FR); LE BLAY, Marie Dominique, 78830 BONNELLES (FR); CHERMAT, Matthieu, 95120 ERMONT (FR); FONFREDE, Stephane, 90000 BELFORT (FR)
(74) Mandataire: BCIP
(86) Numéro de dépôt international: PCT/FR2022/050374
(87) Numéro de publication internationale: WO 2022/223895

(56) Documents cités:
- EP-A1- 3 626 590
- WO-A1-2018/024954
- US-A1- 2001 015 299
- US-A1- 2006 033 322

## Description

La présente invention concerne un dispositif de protection d'un réservoir de carburant pour véhicule automobile, notamment lors d'un choc arrière. Plus particulièrement, le dispositif de protection selon l'invention est destiné à un véhicule à motorisation hybride comportant un moteur thermique et un moteur électrique. L'invention concerne le domaine de la sécurité passive véhicule, plus particulièrement la protection en cas de choc arrière à grande vitesse et notamment un véhicule automobile comportant un dispositif de protection selon l'invention.

Ainsi certains véhicules hybrides présentent en partie arrière du véhicule, logé entre les roues arrières, un moteur électrique de motorisation secondaire. A cet effet, il est positionné au niveau d'un berceau de fixation du train arrière. Ce berceau de fixation est conçu pour délimiter un espace incompressible lors d'un choc arrière afin de préserver le moteur électrique. Un réservoir de carburant pour la motorisation thermique est alors positionné en amont de ce moteur électrique, généralement sous le plancher au niveau de l'assise de rang 2 à l'arrière de la planche à talon.

De ce fait, lorsqu'on réalise un essai choc arrière tel qu'un essai avec barrière à recouvrement 70%, qui représente une forte intrusion de la barrière dans le véhicule, la présence de la zone incompressible prévue pour protéger le moteur électrique génère un empilage barrière/berceau de train/zone incompressible du moteur électrique qui risque d'occasionner un endommagement du réservoir de carburant qui se trouve en amont du moteur électrique, positionné à l'arrière de la planche à talon.

Afin de limiter les risques d'endommagement du réservoir, il est possible de prévoir un réservoir de structure renforcée. Cependant dans ce cas, le réservoir présente un poids plus élevé et pour limiter l'impact de cette augmentation de poids, le volume renfermé est plus petit.

On connait par EP-A-0435197 une structure en arche entourant le réservoir par le dessus et présentant deux montants inférieurs servant de support. En cas de choc arrière, le réservoir qui est isolé du compartiment passager et du coffre, est empêché de s'introduire dans le compartiment passager lors d'un choc arrière, les montants inférieurs renforçant notamment la rigidité structurelle de la partie arrière du véhicule. Toutefois un tel agencement ne peut être proposé pour un véhicule à double motorisation.

Le document WO2018024954 décrit un dispositif de protection de réservoir disposé sous le véhicule et le document EP3626590 décrit un dispositif de protection de réservoir disposé à l'intérieur du véhicule, dans un puit de roue de secours.

La présente invention a donc pour but de proposer un dispositif permettant de protéger le réservoir de carburant d'un endommagement lors d'un choc arrière, notamment pour un véhicule automobile comportant une motorisation électrique en partie arrière dudit véhicule.

A cet effet, l'invention propose un dispositif de protection du réservoir de carburant d'un véhicule automobile, en cas de choc arrière, caractérisé en ce qu'il comprend une première partie formant un écran de protection présentant deux bords opposés destinés à la fixation dudit dispositif sur la face du dessous du véhicule, ledit écran de protection comprenant au moins un élément de structure en forme d'arc s'étendant entre lesdits deux bords de fixation dudit écran de protection, le dispositif comprenant en outre une seconde partie à déformation programmée s'étendant adjacente à l'un desdits bords de fixation de l'écran de protection. La partie déformable est constituée d'un ensemble d'éléments en forme de lamelles, constitué d'un premier jeu de lamelles s'étendant parallèlement les unes aux autres, depuis une première lamelle formant un bord de fixation de l'écran de protection tandis que les autres lamelles s'étendent parallèlement à cette première lamelle le long des éléments de structure jusqu'au sommet de l'arc formé par lesdits éléments de structure en forme d'arc, un deuxième jeu de lamelles étant prévu de sorte que les lamelles s'étendent orthogonalement aux lamelles du premier jeu.

Le dispositif de protection est destiné à être fixé sur le plancher du véhicule avec ses deux bords opposés s'étendant selon l'axe transversal y du véhicule et le ou les éléments en forme d'arc de l'écran de protection s'étendant entre les bords de fixation selon l'axe longitudinal x du véhicule, en recouvrant le réservoir. Le dispositif de protection permet, une fois fixé, de transmettre, par l'intermédiaire du ou des éléments de structure en forme d'arc, de préférence rigides, s'étendant entre les bords, les efforts générés lors d'un choc arrière tandis que la partie à déformation programmée, en se déformant lors du choc, permet une dissipation d'énergie.

De manière avantageuse, l'invention a également pour objet un véhicule à motorisation hybride comprenant un moteur électrique logé dans un espace incompressible ménagé par un berceau de fixation du train arrière du véhicule, et un réservoir à carburant, logé sous la face du dessous ou plancher du véhicule, en amont du moteur électrique et à l'arrière de la planche à talon du plancher, le véhicule comprenant un dispositif de protection du réservoir de carburant contre un choc arrière, caractérisé en ce que le dispositif de protection comprend une première partie formant un écran de protection présentant deux bords opposés destinés à la fixation dudit dispositif sur la face du dessous du véhicule, ledit écran de protection comprenant au moins un élément de structure en forme d'arc s'étendant entre les deux bords de fixation dudit écran de protection, le dispositif comprenant en outre une seconde partie à déformation programmée s'étendant le long d'un bord de fixation de l'écran de protection.

De manière avantageuse, le dispositif selon l'invention est fixé de part et d'autre du réservoir de carburant, en amont (dans l'axe longitudinal x du véhicule) de la zone incompressible formée par le berceau de fixation du train arrière, et en amont du réservoir, de préférence au niveau de la planche à talon, avec ses bords de fixations s'étendant selon l'axe y du véhicule. Ainsi, ceci permet à l'aide du ou des éléments de structure s'étendant selon l'axe x du véhicule, de créer une voie de passage pour les efforts générés lors d'un choc arrière, lors de la déformation de la face du dessous ou plancher arrière.

Le dispositif de protection est également fixé sur le plancher de sorte que la seconde partie à déformation programmée dudit dispositif de protection est positionnée dans un espace entre le berceau de fixation du train arrière et le réservoir de carburant, ce qui permet de dissiper une partie de l'énergie du choc lorsque le berceau de fixation vient buter contre la zone à déformation programmée. Un bord dudit écran de protection est avantageusement fixé entre le berceau de fixation et le réservoir, avec la partie à déformation programmée se trouvant adjacente au berceau de fixation et l'autre bord est fixé en amont du réservoir de carburant, de préférence sur la planche à talon du plancher du véhicule.

Ainsi, on crée à l'aide des éléments de structure du dispositif de protection qui sont de préférence rigides, des voies de passage pour l'énergie de déformation du choc arrière, ce qui permet de rigidifier l'espace dans lequel est logé le réservoir de protection et de préserver celui-ci d'une déformation.

Le dispositif de protection comporte également une partie à déformation programmée qui s'étend le long d'un bord de l'écran de protection, à savoir le bord de l'écran de protection destiné à être fixé sur le plancher au voisinage du berceau de fixation. De ce fait lorsqu'un choc arrière intervient, les efforts vont s'exercer de l'arrière du véhicule vers l'avant de celui-ci. Comme déjà évoqué, le berceau de fixation crée une zone incompressible pour préserver le moteur électrique logé dedans. De ce fait le berceau de fixation sous l'effet de la déformation due au choc arrière, se déplace en maintenant la zone incompressible de protection dans laquelle se trouve le moteur électrique et exerce des efforts contre le dispositif de protection au niveau de sa partie déformable qui est adjacente au berceau de fixation. Cette dernière peut alors se déformer comme programmé. Cette déformation de la partie déformable permet une dissipation de l'énergie liée au choc.

Les éléments de structure en forme d'arc de l'écran de protection fixé sur le plancher entre le berceau et le réservoir permettent quant à eux de guider les efforts depuis ce bord de l'écran de protection fixé à proximité du berceau vers le bord opposé de l'écran fixé sur la planche à talon qui va pouvoir se déformer à son tour pour dissiper de l'énergie.

Le dispositif de protection selon l'invention permet donc de proposer un écran structurel qui, à l'aide des éléments de structure, permet d'entourer le réservoir de carburant et de rigidifier l'espace autour de ce réservoir de carburant tout en proposant de répartir les efforts en exploitant la fixation sur les surfaces de contact au niveau du train arrière et de la planche à talon.

Un dispositif de protection selon l'invention constitue une solution additionnelle applicable à toute synthèse de véhicule à motorisation secondaire arrière, et qui permet d'apporter une protection supplémentaire en sécurisant le réservoir de carburant, même en cas de choc arrière sévère. Un tel dispositif est en outre reconductible sur des plateformes de véhicules différentes et déjà existantes et ce, sans impact sur le procédé de ferrage.

De plus, avec un tel dispositif de protection, le véhicule peut présenter ou conserver un porte-à-faux court ce qui présente un attrait pour le style.

On décrira maintenant l'invention plus en détails en référence aux figures qui représentent :
[Fig. 1] une vue du dessous d'un véhicule à double motorisation ;
[Fig. 2] une vue en perspective latérale d'un véhicule selon la figure 1 lors d'un choc arrière ;

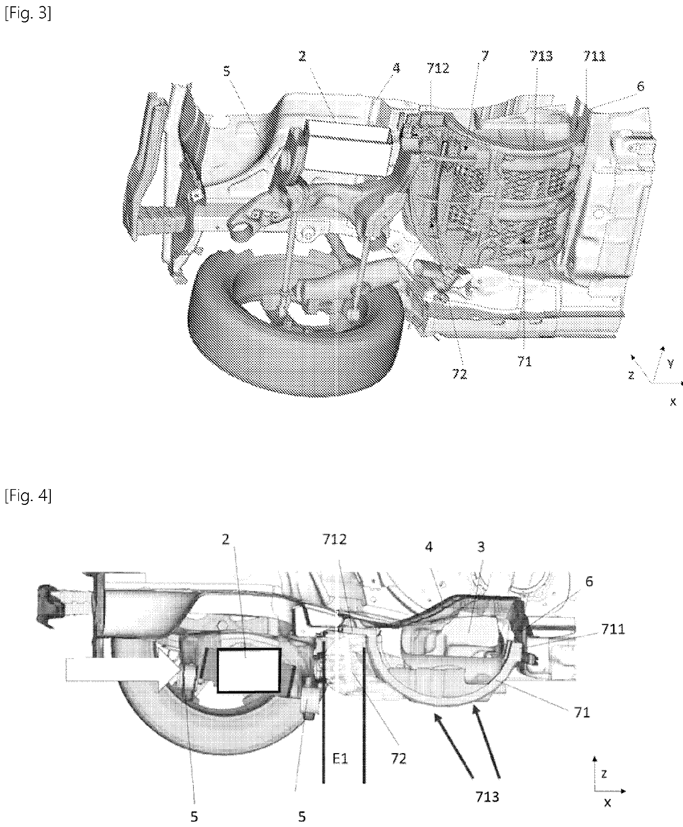

[Fig. 3] une vue du dessous d'un véhicule équipé d'un dispositif de protection selon l'invention ;
[Fig. 4] une vue en perspective latérale du véhicule selon la figure 3 ;
[Fig. 5] une vue en perspective du dessus des différents éléments agencés sur le dessous du véhicule de la figure 3 ;
[Fig.6A] une vue en perspective du dessus d'un dispositif de protection selon l'invention ;
[Fig. 6B] une vue en perspective latérale du dispositif de la figure 6A ;
[Fig. 6C] une vue en perspective d'une extrémité du dispositif de la figure 6A ;

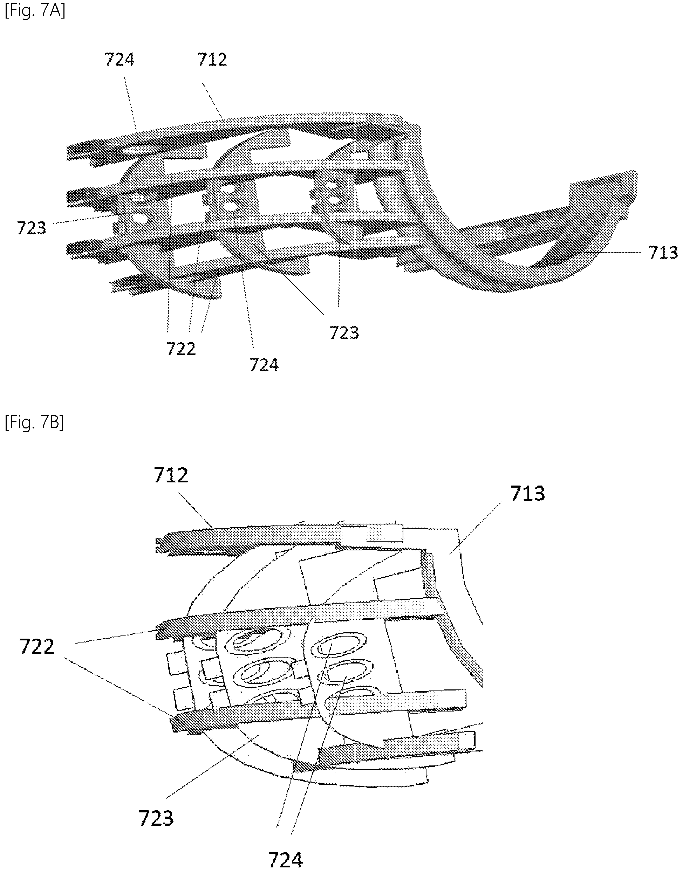

[Fig. 7A] une vue en perspective agrandie d'une partie du dispositif de protection selon l'invention ;
[Fig.7B] une vue en perspective latérale arrière du dispositif de la figure 6A ;

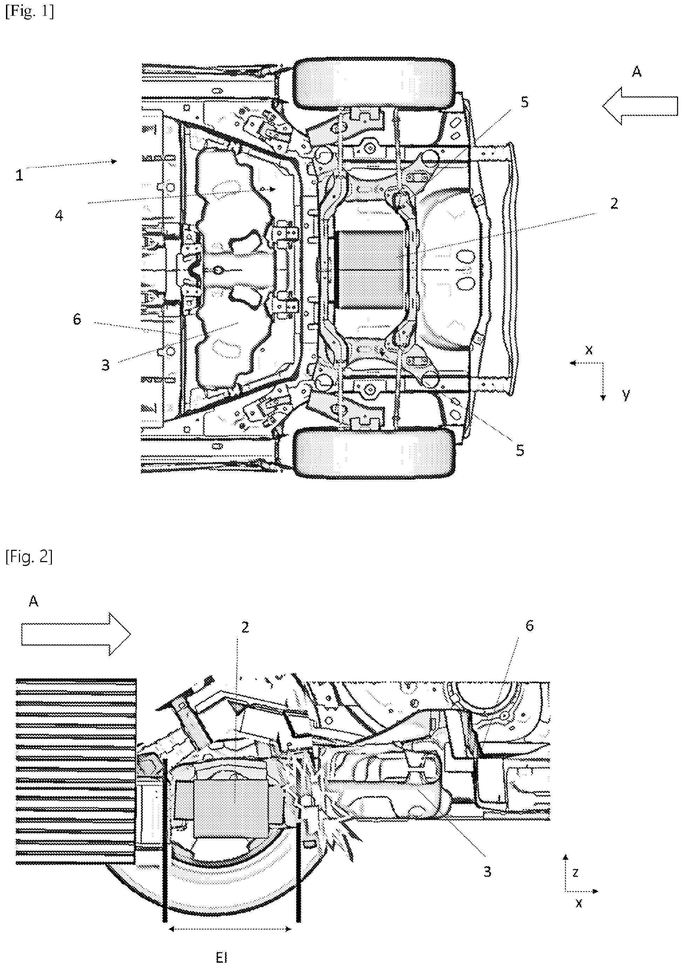

Comme représenté à la figure 1, un véhicule hybride 1, c'est-à-dire présentant à la fois une motorisation thermique et une motorisation électrique, comporte donc un moteur électrique 2 positionné à l'arrière du véhicule 1 et un réservoir de carburant 3. Le repère x, y, z représente, de manière classique, pour x l'axe longitudinal du véhicule 1, y son axe transversal, et z la hauteur. La flèche A représente le sens d'un choc à l'arrière du véhicule 1.

Le moteur électrique 2 est logé sous le plancher arrière 4 du véhicule 1 au niveau d'un berceau de fixation 5 du train arrière. Ce berceau de fixation 5 est conçu pour délimiter un espace incompressible EI lors d'un choc arrière, permettant ainsi de protéger le moteur électrique 2.

Le réservoir de carburant 3 est logé sous le plancher arrière 4 du véhicule 1, en amont du moteur électrique 2 par rapport au véhicule 1. Le réservoir de carburant 3 est ainsi positionné, généralement sous l'assise de rang 2 à l'arrière de la planche à talon 6.

Lors d'un choc arrière, il est nécessaire que le moteur électrique 2 soit protégé et de ce fait, le berceau de fixation 5 du train arrière est conçu pour préserver un espace incompressible EI en cas de choc arrière. Il s'avère qu'alors la déformation arrière qui survient lors d'un choc arrière (selon la flèche A) entraîne un déplacement du berceau de fixation 5 qui protège le moteur 2, vers l'avant du véhicule 1 selon l'axe x, qui peut alors endommager le réservoir de carburant 3 se trouvant en amont du moteur électrique 2, comme cela est visible à la figure 2.

Pour protéger ce réservoir de carburant 3, l'invention propose un dispositif de protection 7 qui présente une partie formant un écran de protection 71 destiné à recouvrir le réservoir de carburant 3. Cette partie formant un écran de protection 71 présente deux bords 711, 712 opposés et destinés à fixer ledit dispositif 7 sur la face du dessous du plancher 4 du véhicule 1 au niveau du réservoir de carburant 3, à l'aide de moyens de fixation appropriés et de manière à recouvrir ledit réservoir 3.

En particulier, le dispositif de protection 7 est fixé par un premier bord 711 qui s'étend selon l'axe transversal y du véhicule, contre la planche à talon 6 et par son bord opposé 712 sur le plancher arrière 4 du véhicule, s'étendant également selon l'axe transversal y, entre le réservoir 3 et le berceau de fixation 5, à proximité du berceau de fixation 5 du train arrière. Entre ces bords opposés 711, 712 s'étendent des éléments de structure en forme d'arc 713. Lorsqu'il est mis en place sous la caisse d'un véhicule 1, les bords 711, 712 du dispositif de protection 7 s'étendent donc principalement selon l'axe transversal y du véhicule 1 tandis que les éléments de structure en forme d'arc 713 s'étendent dans le sens longitudinal principal du véhicule 1, selon l'axe x du véhicule 1.

Cet écran de protection 71 comprend donc ces éléments de structure en forme d'arc rigides 713 s'étendant entre les bords de fixation 711, 712 et, de préférence, également des parois de liaison 714 reliant entre eux les éléments de structure 713. Ces parois de liaison 714 présentent des évidements et sont par exemple réalisées sous forme de treillis, allégeant ainsi le dispositif de protection 7 tout en assurant une tenue mécanique de l'écran de protection 71 en reliant les éléments de structure en forme d'arc 713. Une paroi de liaison peut également être sous forme d'un tunnel 715.

De préférence, la partie formant l'écran de protection 71 du dispositif 7 peut ainsi être sous la forme d'un panneau courbe constitué d'une alternance de parties de panneau pleines constituant les éléments de structure rigides en forme d'arc 713 et de parties de panneau évidées formant les parois de liaison 714 reliant les éléments de structure rigides 713.

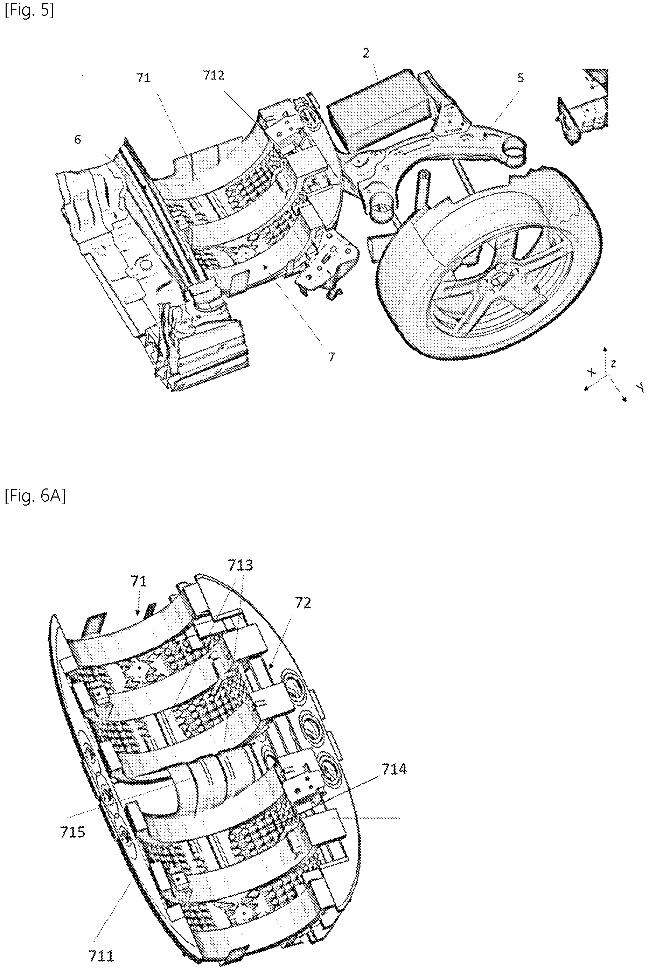

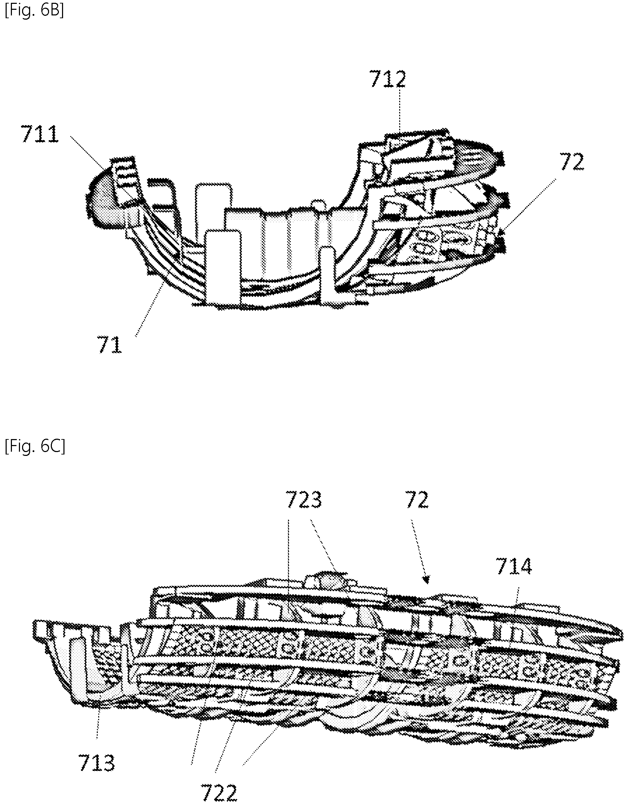

Ainsi sur la figure 6A, l'écran de protection 71 présente deux bords de fixation 711 et 712 entre lesquels s'étendent six éléments de structure en forme d'arc 713, reliés par quatre parois de liaison 714 et une partie en tunnel 715.

La partie écran de protection 71 du dispositif 7 forme ainsi une coque de protection qui recouvre le réservoir 3 et définit un espace entre le plancher 4 et ledit écran de protection 71 dans lequel est logé le réservoir 3.

Le dispositif de protection 7 comporte en outre une partie déformable 72, selon une déformation programmée, ménagée le long d'un bord de l'écran de protection 71, à savoir le bord 712 de l'écran de protection 71 fixé sur le plancher 4 au voisinage du berceau de fixation 5. Cette partie déformable 72 est ainsi positionnée adjacente au berceau de fixation 5, sensiblement dans l'espace E1 entre le berceau de fixation 5 et le réservoir 3.

De ce fait lorsqu'un choc arrière intervient les efforts vont s'exercer de l'arrière du véhicule 1 vers l'avant de celui-ci dans le sens de la flèche A. Comme déjà évoqué, le berceau de fixation 5 crée une zone incompressible EI pour préserver le moteur électrique 2. De ce fait le berceau de fixation 5 sous l'effet de la déformation due au choc arrière, exerce des efforts contre le dispositif de protection 7 au niveau de sa partie déformable 72. Cette dernière logée dans l'espace E1 entre le berceau de fixation 5 et le réservoir 3 peut alors se déformer comme programmé. Cette déformation de la partie déformable 72 permet une dissipation de l'énergie liée au choc.

Les éléments de structure en forme d'arc 713 de l'écran de protection 71 permettent quant à eux de guider les efforts depuis le bord 712 de l'écran de protection 71 fixé au plancher 4 et adjacent au berceau de fixation 5 vers le bord opposé 711 de l'écran 7 fixé sur la planche à talon 6 qui va pouvoir se déformer à son tour pour dissiper de l'énergie.

Lors d'un choc arrière, les éléments de structure en forme d'arc 713 qui sont rigides, ne se déforment que très peu et transmettent les efforts tout en préservant un espace de protection du réservoir de carburant 3. Dans le cas de choc plus sévère, les éléments de structure en forme d'arc 713 se déforment, tout en restant élastiques, c'est-à-dire qu'ils reviennent à leur forme initiale après choc.

Le matériau constituant le dispositif de protection 7 selon l'invention est de préférence un matériau composite à base de résine thermodurcissable renforcé de fibres soit du type SMC (Sheet Moulding Componds sous forme de feuille) soit du type BMC (Bulk Moulding Compounds, semi-produit à base de résine, de charges et d'adjuvants divers, renforcé par des fibres de verre coupées, qui se présente en vrac). Dans ce cas, le partie écran de protection est obtenue par moulage.

On peut également envisager que ce dispositif soit réalisé en aluminium. De même, le dispositif peut être constitué de manière mixte : avec un matériau composite et une armature métallique.

Le dispositif de protection 7 du réservoir de carburant 3 selon l'invention permet de répartir les efforts de déformation liés au choc arrière à l'aide de deux surfaces, la face du berceau 5 en regard de la partie déformable 72 du dispositif de protection 7 et la planche à talon 6.

Ainsi, grâce au dispositif de protection 7, on préserve le réservoir 3 d'un endommagement lors d'un choc arrière, les efforts du choc étant déviés par les éléments de structure en forme d'arc 713 et une partie de l'énergie étant dissipée par la déformation de la zone 72 du dispositif de protection 7.

La partie déformable 72 est constituée d'un ensemble d'éléments en forme de lamelles, plus exactement deux jeux de lamelles. Un premier jeu est constitué de lamelles 722 s'étendant parallèlement les unes aux autres, depuis une première lamelle formant le bord 712 de l'écran de protection 7, à partir duquel s'étendent les éléments de structure en forme d'arc 713. Cette lamelle 712 permet la fixation du dispositif sur le plancher 4 tandis que les autres lamelles 722 s'étendent parallèlement, de manière écartée entre elles, à cette lamelle 712 le long des éléments de structure 713 sensiblement jusqu'au sommet de l'arc formé par les éléments de structure en forme d'arc 713. Le bord 711 est également constitué d'une lamelle similaire.

Un deuxième jeu de lamelles 723 est prévu de sorte que les lamelles 723 s'étendent orthogonalement aux lamelles 722 du premier jeu. Les lamelles 711, 712, 722, 723 présentent des orifices 724 permettant une déformation aisée. Ces lamelles présentent une épaisseur de 2 à 3 mm.

Une fois le dispositif de protection 7 installé sur la face du dessous du véhicule, les lamelles 722 s'étendent transversalement au véhicule selon l'axe y et les lamelles 723 s'étendent selon l'axe z du véhicule.

Le dispositif selon l'invention permet notamment de satisfaire à l'un des protocoles de choc Arrière les plus sévères tel que celui du département des transports des Etats-Unis d'Amérique connu sous la dénomination, « choc AR 80kph, NHTSA 1368 - recouvrement 70% (NHTSA étant l'acronyme anglais National Highway Traffic Safety Administration, désignant l'administration en charge de la sécurité routière nationale).

## Revendications

1. Dispositif de protection (7) du réservoir de carburant (3) d'un véhicule automobile (1) en cas de choc arrière comprenant une première partie formant un écran de protection (71) présentant deux bords (711, 712) opposés, destinés à la fixation dudit dispositif de protection (7) sur la face du dessous du véhicule, ledit écran de protection (71) comprenant au moins un élément de structure en forme d'arc (713) s'étendant entre les deux bords (711, 712) dudit écran de protection (71), le dispositif comprenant en outre une seconde partie à déformation programmée (72) s'étendant le long d'un (712) des bords de fixation de l'écran de protection (72), **caractérisé en ce que** la partie déformable (72) est constituée d'un ensemble d'éléments en forme de lamelles, constitué d'un premier jeu de lamelles (722) s'étendant parallèlement les unes aux autres, depuis une première lamelle formant un bord de fixation (712) de l'écran de protection (7) tandis que les autres lamelles (722) s'étendent parallèlement à cette première lamelle le long des éléments de structure (713) jusqu'au sommet de l'arc formé par lesdits éléments de structure en forme d'arc (713), un deuxième jeu de lamelles (723) étant prévu de sorte que les lamelles (723) s'étendent orthogonalement aux lamelles (722) du premier jeu.

2. Dispositif de protection selon la revendication 1, **caractérisé en ce que** l'écran de protection (71) est constitué des éléments de structure rigide en forme d'arc (713) s'étendant entre les bords de fixation (711 et 712), et de parois de liaison (714) entre lesdits éléments de structure rigide en forme d'arc (713).

3. Dispositif de protection selon la revendication 2, **caractérisé en ce que** les parois de liaison (714) présentent des évidements (724).

4. Dispositif de protection selon la revendication 3, **caractérisé en ce que** la partie formant l'écran de protection (71) est sous la forme d'un panneau courbe constitué d'une alternance de parties de panneau pleines constituant les éléments de structure rigides en forme d'arc (713) et de parties de panneau évidées formant les parois de liaison (714) reliant les éléments de structure rigides (713).

5. Dispositif de protection selon l'une des revendications précédentes, **caractérisé en ce que** les lamelles (721, 722, 723) présentent des orifices (724) permettant une déformation aisée.

6. Dispositif de protection selon l'une des revendications précédentes, **caractérisé en ce qu'**il est constitué d'un matériau composite à base de résine thermodurcissable renforcé de fibres, ou en aluminium ou d'un matériau composite associée à une armature métallique.

7. Véhicule automobile (1) à motorisation hybride comportant un moteur électrique (2) logé dans un espace incompressible (EI) ménagé par un berceau de fixation (5) du train arrière du véhicule, et un réservoir à carburant (3), logé sous le plancher (4) du véhicule (1), en amont du moteur électrique (2) et à l'arrière de la planche à talon (6) du plancher (4), **caractérisé en ce qu'**il comprend un dispositif de protection (7) du réservoir de carburant (3) contre un choc arrière selon l'une des revendications précédentes .

8. Véhicule automobile (1) selon la revendication 7, **caractérisé en ce que** le dispositif de protection (7) est fixé sur la face du dessous du plancher (4) du véhicule (1) avec ses deux bords (711, 712) opposés s'étendant selon l'axe transversal (y) du véhicule et le ou les éléments en forme d'arc (713) de l'écran de protection (71) s'étendant entre les bords de fixation (711, 712) selon l'axe longitudinal (x) du véhicule, en recouvrant le réservoir de carburant (3).

9. Véhicule automobile (1) selon la revendication 8, **caractérisé en ce qu'**un bord (712) dudit écran de protection (71) étant fixé entre le berceau de fixation (5) et le réservoir (3), avec la partie à déformation programmée (72) se trouvant adjacente au berceau de fixation (5) et l'autre bord (711) étant fixé en amont du réservoir de carburant (3), de préférence sur la planche à talon (6) du plancher (4) du véhicule automobile (1).

## Patentansprüche

1. Schutzvorrichtung (7) für den Kraftstofftank (3) eines Kraftfahrzeugs (1) bei einem Heckaufprall, die einen ersten Schutzschirmabschnitt (71) mit zwei gegenüberliegenden Rändern (711, 712) zur Befestigung der Schutzvorrichtung (7) an der Unterseite des Fahrzeugs umfasst, wobei die Schutzvorrichtung (71) mindestens ein bogenförmiges Strukturelement (713) umfasst, das sich zwischen den beiden Rändern (711, 712) der Schutzvorrichtung (71) erstreckt, wobei die Vorrichtung ferner eine umfasst Zweiter Teil mit programmierter Verformung (72), der sich entlang einer (712) der Befestigungskanten des Schutzschirms (72) erstreckt, **dadurch gekennzeichnet, dass** der verformbare Teil (72) aus einem Satz lamellenartiger Elemente besteht, der aus einem ersten Satz Lamellen (722) besteht, die sich parallel zueinander von einer ersten Lamelle erstrecken, die eine Befestigungskante (712) des Schutzschirms (7) bildet, während die anderen Lamellen (722) sich parallel zu dieser ersten Lamelle entlang der Elemente erstrecken von der Struktur (713) bis zur Spitze des durch die bogenförmigen Strukturelemente (713) gebildeten Bogens, wobei ein zweiter Satz von Lamellen (723) derart vorgesehen ist, dass die Lamellen (723) orthogonal zu den Lamellen (722) des ersten Satzes verlaufen.

2. Schutzvorrichtung nach Anspruch 1, **dadurch gekennzeichnet, dass** die Schutzabschirmung (71) aus bogenförmigen starren Strukturelementen (713), die sich zwischen den Befestigungsrändern (711 und 712) erstrecken, und Verbindungswänden (714) zwischen den bogenförmigen starren Strukturelementen (713) besteht.

3. Schutzvorrichtung nach Anspruch 2, **dadurch gekennzeichnet, dass** die Verbindungswände (714) Ausnehmungen (724) aufweisen.

4. Schutzvorrichtung nach Anspruch 3, **dadurch gekennzeichnet, dass** der Teil, der die Schutzabschirmung (71) bildet, die Form einer gekrümmten Platte hat, die aus abwechselnden vollen Plattenabschnitten besteht, die die starren bogenförmigen Strukturelemente (713) bilden, und aus vertieften Plattenabschnitten, die die Verbindungswände (714) bilden, die die starren Strukturelemente (713) verbinden.

5. Schutzvorrichtung nach einem der vorhergehenden Ansprüche, **dadurch gekennzeichnet, dass** die Lamellen (721, 722, 723) Öffnungen (724) aufweisen, die eine leichte Verformung ermöglichen.

6. Schutzvorrichtung nach einem der vorhergehenden Ansprüche, **dadurch gekennzeichnet, dass** sie aus einem Verbundwerkstoff auf Basis eines wärmehärtbaren, faserverstärkten Harzes oder aus Aluminium oder aus einem mit einer Metallarmierung verbundenen Verbundwerkstoff besteht.

7. Hybrid-Kraftfahrzeug (1) mit einem Elektromotor (2), der in einem nicht komprimierbaren Raum (EI) untergebracht ist, der von einem Befestigungsgestell (5) des hinteren Zuges des Fahrzeugs gebildet wird, und einem Kraftstofftank (3), der unterhalb des Bodens (4) des Fahrzeugs (1) vor dem Elektromotor (2) und hinter dem Fersenbrett (6) des Bodens (4) untergebracht ist, **dadurch gekennzeichnet, dass** er eine Vorrichtung (7) zum Schutz des Kraftstofftanks (3) gegen einen Heckaufprall nach einem der vorhergehenden Ansprüche umfasst.

8. Kraftfahrzeug (1) nach Patentanspruch 7, **dadurch gekennzeichnet, dass** die Schutzvorrichtung (7) an der Unterseite des Bodens (4) des Fahrzeugs (1) befestigt ist, mit ihren beiden gegenüberliegenden Rändern (711, 712), die sich entlang der Querachse (y) des Fahrzeugs erstrecken, und dem oder den bogenförmigen Elementen (713) des Schutzschirms (71), die sich zwischen den Befestigungsrändern (711, 712) entlang der Längsachse (x) des Fahrzeugs erstrecken, wobei der Kraftstofftank bedeckt ist (3).

9. Kraftfahrzeug (1) nach Anspruch 8, **dadurch gekennzeichnet, dass** eine Kante (712) der Schutzabschirmung (71) zwischen dem Befestigungsgestell (5) und dem Tank (3) befestigt ist, wobei sich der Teil mit programmierter Verformung (72) neben dem Befestigungsgestell (5) befindet und die andere Kante (711) stromaufwärts des Kraftstofftanks (3) befestigt ist, vorzugsweise auf dem Fersenbrett (6) des Bodens (4) des Kraftfahrzeugs (1).

## Claims

1. Device (7) for protecting the fuel tank (3) of a motor vehicle (1) in the event of a rear impact, comprising a first part forming a protective screen (71) having two opposite edges (711, 712), intended for fixing said protective device (7) to the underside of the vehicle, said protective screen (71) comprising at least one arc-shaped structural item (713) extending between the two edges (711, 712) of said protective screen (71), the device further comprising a second programmed-deformation part (72) extending along one (712) of the fixing edges of the protective screen (72), wherein the deformable part (72) is constituted by an assembly of items lamellae, consisting of a first set of lamellae (722) extending parallel to each other, from a first lamellae forming a fastening edge (712) of the protective shield (7) while the other lamellae (722) extend parallel to this first lamellae along the structural items (713) up to the apex of the arc formed by said arc-shaped structural items (713), a second set of lamellae (723) being provided such that the lamellae (723) extend orthogonally to the lamellae (722) of the first set.

2. The protective device according to claim 1, wherein the protective shield (71) is constituted by items of a rigid arc-shaped structure (713) extending between the fixing edges (711 and 712), and connecting walls (714) between said items of a rigid arc-shaped structure (713).

3. Protection device according to Claim 2, **characterised in that** the connecting walls (714) have recesses (724).

4. The protective device according to claim 3, wherein the part forming the protective shield (71) is in the shape of a curved sign consisting of alternating solid sign parts constituent the arc-shaped rigid structural items (713) and recessed sign parts forming the connecting walls (714) connecting the rigid structural items (713).

5. The protective device according to claim 5, wherein the blades (721, 722, 723) have orifices (724) for previous deformation.

6. The protective device according to claim 6, wherein the protective device is made of a previous material based on a fibre-reinforced thermosetting resin, or of aluminium or of a composite material associated with a metal reinforcement.

7. Hybrid motor vehicle (1) comprising an electric motor (2) housed in an incompressible space (EI) provided by a cradle (5) for fixing the rear axle of the vehicle, and a fuel tank (3), housed under the floor (4) of the vehicle (1), upstream to the electric motor (2) and in the rear of the heel board (6) of the floor (4), **characterised in that** it comprises a device (7) for protecting the fuel tank (3) against a rear impact according to one of the previous claims.

8. Motor vehicle (1) according to Claim 7, wherein the protective device (7) is fixed to the underside of the floor (4) of the vehicle (1) with its two opposite sides (711, 712) extending along the transverse axis (y) of the vehicle and the arc-shaped item(s) (713) of the protective screen (71) extending between the fixing sides (711, 712) along the longitudinal axis (x) of the vehicle, covering the fuel tank (3).

9. Motor vehicle (1) according to Claim 8, **characterised in that** one edge (712) of said protective shield (71) is fixed between the fixing cradle (5) and the tank (3), with the programmed deformable part (72) being adjacent to the fixing cradle (5) and the other edge (711) being fixed upstream from the fuel tank (3), preferably on the heel board (6) of the floor (4) of the motor vehicle (1).
